# FASCICULE DE BREVET EUROPEEN

(11) **EP 3 889 941 B1**
(45) Date de publication et mention de la délivrance du brevet: **13.09.2023**
(21) Numéro de dépôt: 21175991.5
(22) Date de dépôt: 02.04.2019
(51) Int. Cl.: G08C 17/02

(54) **DISPOSITIF DE COMMANDE SANS FIL ET ENSEMBLE COMPRENANT UN TEL DISPOSITIF, AINSI QU'UN AUTRE DISPOSITIF DE COMMANDE APTE À ÊTRE BRANCHÉ SUR UN FIL ÉLECTRIQUE**
DRAHTLOSE STEUERVORRICHTUNG UND ANORDNUNG, DIE EINE SOLCHE VORRICHTUNG SOWIE EINE ANDERE STEUERVORRICHTUNG UMFASST, DIE AN EINE ELEKTRISCHE LEITUNG ANGESCHLOSSEN WERDEN KANN
WIRELESS CONTROL DEVICE AND ASSEMBLY COMPRISING SUCH A DEVICE, AS WELL AS ANOTHER CONTROL DEVICE CAPABLE OF BEING CONNECTED TO AN ELECTRIC WIRE

(30) Priorité: 03.04.2018 FR 1852872
(43) Date de publication de la demande: 06.10.2021
(62) Demande divisionnaire de: 19166904.3
(73) Titulaire: Schneider Electric Industries SAS, 92500 Rueil-Malmaison (FR)
(72) Inventeur: PAYET-BURIN, Jean-Luc, 38340 VOREPPE (FR)
(74) Mandataire: Lavoix

(56) Documents cités:
- US-A1- 2005 275 581

## Description

La présente invention concerne un dispositif de commande sans fil.

Classiquement, un dispositif de commande sans-fil est un interrupteur du type communiquant, communément appelé interrupteur sans fil sans pile, capable de commander à distance un autre interrupteur qui lui est branché sur un fil électrique, tel que par exemple un fil électrique d'alimentation d'un luminaire. Souvent, cet autre interrupteur est qualifié de micromodule, car il est associé, d'une part, à un récepteur capable de recevoir des signaux envoyés par un émetteur de l'interrupteur sans fil et, d'autre part, à une unité de traitement. Notamment, pour des luminaires, on parlera d'un micromodule d'éclairage. Un interrupteur sans fil peut également être utilisé pour commander à distance un volet roulant ou un store.

Les interrupteurs sans fil présentent l'avantage qu'ils peuvent être positionnés pratiquement n'importe où, et notamment hors du chemin emprunté par le câble d'alimentation électrique. L'utilisateur peut donc choisir l'endroit qui lui parait le plus ergonomique. Un interrupteur sans fil peut être placé, comme un interrupteur classique, dans une réservation du mur, ou tout simplement collé ou vissé contre la paroi.

Généralement, l'interrupteur sans fil communique avec le micromodule par voie radio, c'est-à-dire par transmission hertzienne.

Auparavant, les interrupteurs sans fil comportaient des piles pour alimenter l'émetteur. Toutefois, il fallait changer la pile au bout d'un certain temps, ce qui n'était pas très commode pour les usagers.

Ainsi, les interrupteurs sans fil fonctionnent aujourd'hui sans pile, mais avec un convertisseur d'énergie, que l'on appelle « energy harvester ». Ces convertisseurs d'énergie sont en fait des générateurs électriques qui tirent profit de l'énergie mécanique exercée par l'utilisateur lorsqu'il appuie sur le bouton de l'interrupteur pour générer un signal électrique. Ce signal électrique a une amplitude suffisante pour permettre de générer et d'envoyer un signal de commande au micromodule placé à distance. On connait principalement des convertisseurs du type piézoélectrique, utilisant les propriétés d'un matériau à générer une tension lorsqu'il subit des contraintes mécanique et les convertisseurs du type électromagnétique, utilisant le déplacement d'un aimant pour générer des courants induits dans un circuit.

DE 1 0256 156 divulgue un exemple d'un interrupteur sans fil et sans pile. L'avantage d'utiliser un convertisseur d'énergie dans un interrupteur sans fil est que l'interrupteur est complètement autonome et donc qu'il n'y a pas besoin de changer la pile.

Toutefois, l'inconvénient des interrupteurs sans fil du marché est que le bouton est relativement difficile à actionner, du moins par rapport à un interrupteur classique branché sur le fil d'alimentation. Plus précisément, l'effort nécessaire pour actionner les interrupteurs sans fil actuels est compris entre 7 et 10N, alors que l'effort nécessaire pour actionner un interrupteur standard branché sur fil est de l'ordre de 3N. Ainsi, les interrupteurs sans fil du marché ne sont par exemple pas adaptés aux enfants.

US 2005/0275581 divulgue un exemple d'un interrupteur sans fil et sans pile. Cet interrupteur comprend un générateur, qui comprend une lame déformable prévue pour être basculée par un mécanisme relié à un bouton. Cependant, un tel interrupteur sans fil utilise un générateur peu performant, et ne permet pas d'utiliser d'autres types de générateurs plus performants.

C'est à cet inconvénient qu'entend plus particulièrement remédier l'invention, en proposant un nouveau type d'interrupteur sans fil et sans pile, permettant d'utiliser des générateurs plus performants.

A cet effet l'invention concerne un dispositif de commande sans fil tel que défini à la revendication 1.

Grâce à l'invention, il est possible d'utiliser un générateur électrique performant comprenant au moins une bobine et un bloc coulissant, et l'association de l'organe de transmission avec le levier d'actionnement permet de générer un mouvement de translation déplaçant le bloc coulissant à partir d'un mouvement de rotation du bouton d'actionnement, tout en étant particulièrement compact.

Des aspects avantageux mais non obligatoires du dispositif de commande sans fil conforme à l'invention sont spécifiés aux revendications 2 à 10.

L'invention concerne également un ensemble comprenant un dispositif de commande sans fil tel que défini aux revendications 1 à 10 et un autre dispositif de commande, qui est apte à être branché sur un fil électrique et qui comporte un micro-récepteur configuré pour recevoir un signal de commande envoyé par le dispositif sans-fil.

L'invention et d'autres avantages de celle-ci apparaitront plus clairement à la lumière de la description qui va suivre de deux modes de réalisation d'un dispositif de commande sans fil conforme à son principe, donnée uniquement à titre d'exemple et faite en référence aux dessins annexés dans lesquels :
- La figure 1 est une vue éclatée d'un dispositif de commande sans fil conforme à un premier mode de réalisation de l'invention,
- La figure 2 est une vue en perspective du dispositif de commande de la figure 1, alors en configuration assemblée,
- La figure 3 est une vue de dessus du dispositif de commande des figures 1 et 2, dans laquelle le bouton d'actionnement du dispositif est omis pour permettre une meilleure visualisation des autres composants du dispositif,
- La figure 4 est une vue en perspective d'un organe de transmission du dispositif de commande, alors assemblé avec un générateur électrique capable de convertir l'énergie mécanique transmise à l'organe en une énergie électrique,
- La figure 5 est une vue en perspective montrant notamment le dessous du bouton,
- La figure 6 est une vue comparable à celle de la figure 3, mais pour un second mode de réalisation de l'invention, et
- La figure 7 est une vue comparable à celle de la figure 5, et montre donc le bouton du dispositif selon le deuxième mode de réalisation.

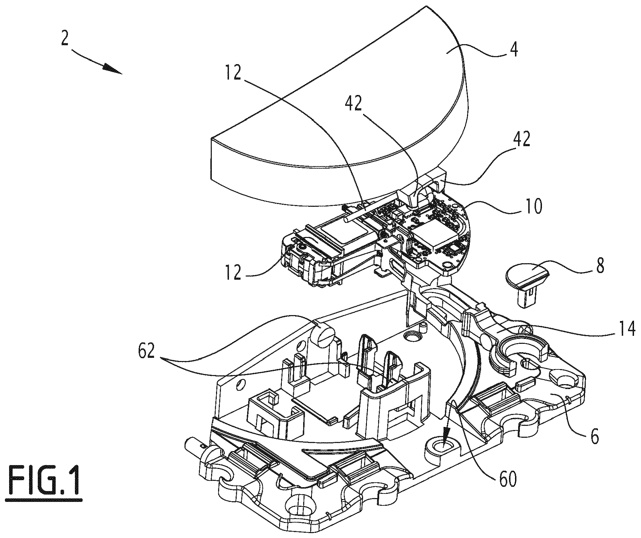

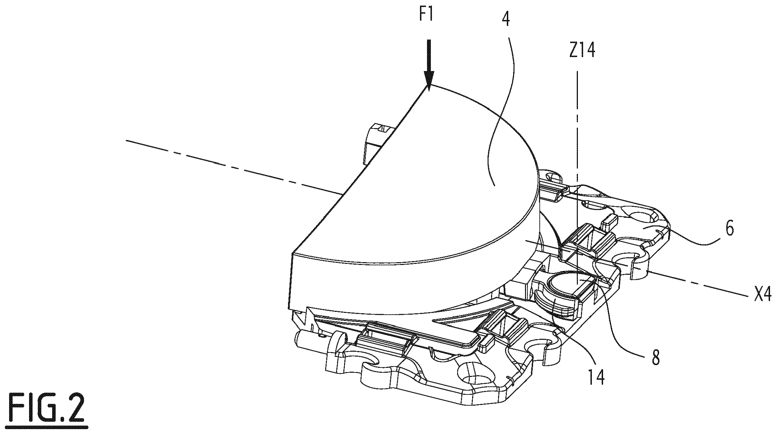

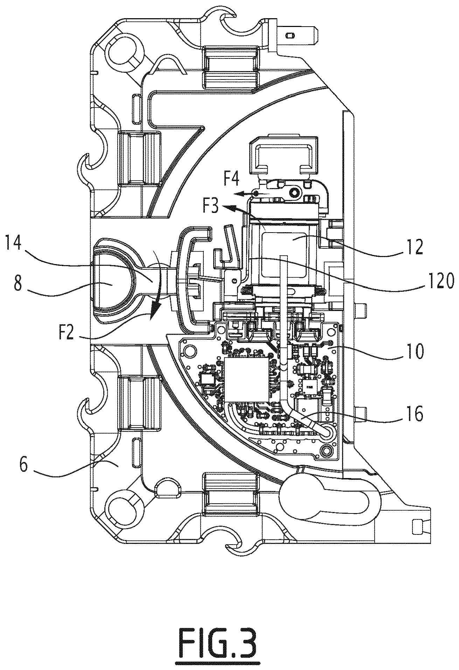

Sur les figures 1 à 5 est représenté un premier mode de réalisation d'un dispositif de commande, ou interrupteur sans fil et sans pile 2.

Cet interrupteur 2 comprend un bouton d'actionnement 4, un circuit électronique de commande 10, un générateur électrique 12 pour alimenter le circuit 10 et un organe de transmission 14, pour transmettre une énergie mécanique appliquée sur le bouton d'actionnement 4 au générateur 12.

Le circuit électronique 10 comporte un émetteur 16 capable de transmettre, par voie sans fil, un signal de commande à un autre interrupteur (non représenté) branché sur un fil électrique, tel que par exemple un fil électrique d'alimentation d'un luminaire. Cet autre interrupteur peut être mieux connu sous le nom de micromodule, car il est associé, d'une part, à un récepteur capable de recevoir des signaux envoyés par l'émetteur de l'interrupteur sans fil et, d'autre part, à une unité de traitement. Notamment, pour des luminaires, on parlera d'un micromodule d'éclairage.

On parle alors d'un ensemble comprenant l'interrupteur sans fil 2 et ledit autre interrupteur, qui est apte à être branché sur un fil électrique et qui comporte un micro-récepteur configuré pour recevoir un signal de commande envoyé par l'interrupteur sans-fil.

Avantageusement, l'émetteur 16 est une antenne, notamment une antenne capable de transmettre un signal par voie hertzienne, c'est-à-dire d'émettre des ondes électromagnétiques. En variante, d'autres modes de transmission pourraient être utilisés, comme la technologie Bluetooth low energy ou le protocole ZigBee, etc.

Ici, le circuit électronique de commande 10 est constitué par un circuit imprimé, c'est-à-dire par une carte électronique.

Dans l'exemple, le bouton d'actionnement 4 est un bouton basculant, c'est-à-dire un bouton conçu pour pivoter autour d'un axe X4. Néanmoins, en variante, le bouton 4 pourrait aussi être un bouton poussoir.

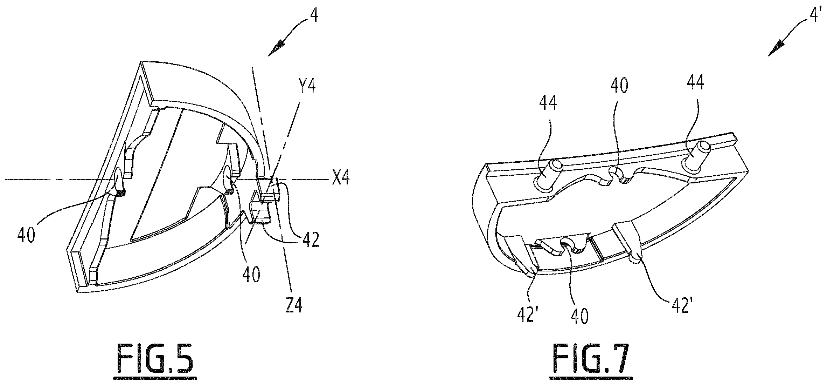

Comme visible à la figure 5, le bouton 4 comprend deux réceptacles 40 de forme circulaire, conçus pour recevoir chacun un bout d'arbre 62. Les deux bouts d'arbre 62 font partie d'une plaque support 6 moulée en matière plastique.

Le générateur 12 est capable de convertir une énergie mécanique en énergie électrique. Dans l'exemple décrit, le générateur 12 est un générateur électromagnétique, parfois mieux connu sous le nom de « harvester » (dérivé de l'Anglais). Il s'agit d'un modèle connu en soi, qui est commercialisé par la société ZF Friedrichshafen AG, c'est pourquoi il n'est pas décrit plus avant. Son principe de fonctionnement est le suivant : Le générateur 12 comprend un aimant permanent et au moins une bobine. Tout déplacement de l'aimant génère une variation du champ magnétique autour des spires de la ou des bobines. Chaque bobine, comme tout circuit électrique placé dans un champ magnétique variable, est alors parcourue par un courant électrique, qualifié de courant induit.

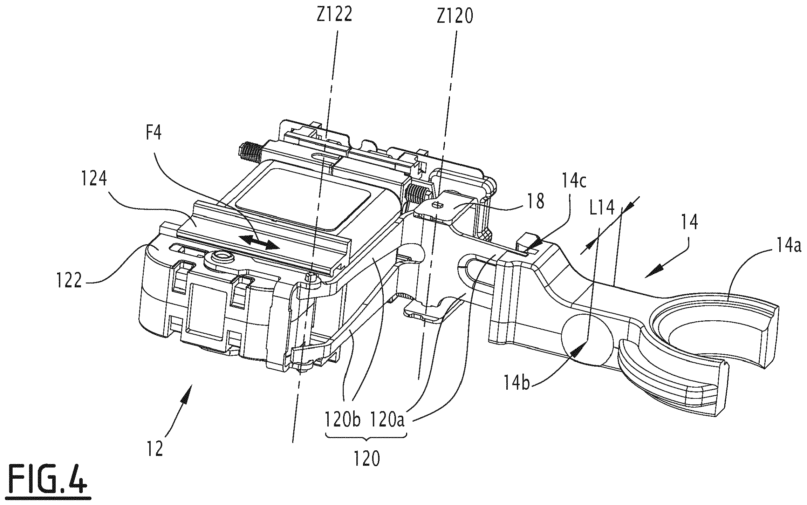

Comme visible à la figure 4, le générateur électrique 12 comprend avantageusement un mécanisme pour générer un mouvement de translation F4 à partir d'une rotation F2 de l'organe de transmission 14. Ce mécanisme comprend un levier d'actionnement 120.

De préférence, le levier 120 est en forme de L, et comprend une première partie 120a configurée pour coopérer avec l'organe de transmission 14 et une seconde partie 120b reliée à un bloc coulissant 122 du générateur 12. La liaison entre le bloc coulissant 122 et la partie 120b du levier 120 est une liaison pivot, dont l'axe de pivotement est référencé Z122. Les parties 120a et 120b du levier 120 sont chacune constituées de deux branches sensiblement parallèles.

Dans l'exemple, le levier 120 est monté pivotant autour d'un axe Z120, parallèle à l'axe Z122, au niveau de sa partie intermédiaire, c'est-à-dire entre les parties 120a et 120b. Typiquement, le levier 120 est interposé entre les deux branches d'une plaque en U 18 formant un support de pivotement.

Avantageusement, le bloc coulissant 122 comprend un ou plusieurs aimants permanents, permettant de générer un champ magnétique autour d'une ou plusieurs bobines (non représentées). Le bloc coulissant 122 est guidé dans un rail 124 en forme de U. Le sens de déplacement du bloc coulissant 122 est perpendiculaire à l'axe Z122.

Le générateur 12 est fixé à la plaque support 6 au moyen d'une pièce rapportée (non visible sur les figures), laquelle est clippée (ou clipsée), c'est-à-dire verrouillée élastiquement, sur la plaque support 6.

Dans l'exemple particulier des figures 1 à 5, l'organe de transmission 14 est un levier, mobile en rotation autour d'un axe Z14. L'axe X4 de pivotement du bouton 4 est perpendiculaire, et de préférence sécant, avec l'axe Z14 de pivotement de l'organe de transmission 14.

L'organe de transmission 14 fait le lien entre le bouton 4 et le générateur 12. Il s'agit donc d'une pièce distincte du bouton 4, et également distincte du générateur 12.

Typiquement, l'organe de transmission 14 est un levier articulé autour d'un pion 8 ayant un pied et un chapeau. Le chapeau présente une section au moins en partie circulaire, ici semi-circulaire, pour l'articulation du levier. Le pied est inséré dans un logement 60 de la plaque support 6, et est immobilisé en rotation par complémentarité de formes avec le logement 60.

Dans l'exemple, et comme visible à la figure 4, l'organe de transmission 14 comprend une partie 14a en C conformée pour coopérer avec le chapeau du pion 8, et permettre l'articulation de l'organe de transmission 14 autour du pion 8. L'organe de transmission 14 comprend également de façon avantageuse des moyens 14b pour coopérer mécaniquement avec le bouton d'actionnement 4 et des moyens 14c pour coopérer mécaniquement avec le générateur électrique 12.

Typiquement, les moyens 14c comprennent une fente, à l'intérieur de laquelle l'extrémité libre de la partie 120a du levier d'actionnement 120 est reçue.

De préférence, les moyens 14b comprennent deux faces bombées, disposées de manière opposée l'une par rapport à l'autre. Chacune des deux faces bombées est configurée pour coopérer avec une patte 42 du bouton 4, les deux pattes 42 du bouton 4 étant particulièrement visibles à la figure 5. Les deux pattes 42 s'étendent, sur la face inférieure du bouton 4, parallèlement à un axe Z4 perpendiculaire à l'axe de basculement X4 du bouton 4. Les deux pattes 42 sont par ailleurs alignées sur un axe commun Y4 perpendiculaire à la fois à l'axe X4 et à l'axe Z4.

Avantageusement, la largeur L14 du levier, référencée à la figure 4, et mesurée au niveau des faces bombées formant les moyens 14b, est sensiblement identique à l'écartement entre les deux pattes 42 du bouton 4. Notamment, en configuration assemblée de l'interrupteur 2, les pattes 42 sont disposées de part et d'autre de l'organe de transmission 14, et prennent appui respectivement contre les deux faces bombées.

Le bouton d'actionnement 2 et l'organe de transmission 14 sont spécifiquement conçus de sorte que la force d'activation F1 du bouton d'actionnement 4 est inférieure à la force F3 transmise au générateur 12 par l'organe de transmission 14. La force d'activation F1 du bouton d'actionnement est la force minimale nécessaire pour actionner le bouton 4, c'est-à-dire dans l'exemple pour faire basculer le bouton 4. Ainsi, étant donné que le bouton 4 est du type basculant, la force minimale est celle appliquée au plus loin de l'axe de basculement X4, pour profiter au maximum de l'effet de levier.

En détail, lorsqu'on exerce un effort F1 sur le bouton 4 de l'interrupteur 2, alors en position ouverte, le bouton 4 bascule autour de l'axe X4 et l'une des pattes 42 du bouton 4 pousse la face bombée 14b avec laquelle il coopère selon une direction parallèle à l'axe Y4. Cet effort de poussée entraine le pivotement de l'organe de transmission 14, c'est-à-dire du levier, autour de l'axe Z14. En pivotant, l'organe de transmission 14 tire sur le levier d'actionnement 120 du générateur électrique 12. L'interrupteur 2 est alors en position fermée. Le levier d'actionnement 120 bascule autour de l'axe Z120 et tire (ou pousse) sur le bloc coulissant 122, lequel se déplace alors en translation dans le rail 124. Le champ magnétique à l'intérieur du générateur 12 varie, et un courant induit est généré.

Ce courant induit est transformé sous une forme exploitable pour permettre l'alimentation du circuit de commande 10. L'impulsion électrique fournie par le générateur électrique permet au circuit de commande 10 de générer un signal, constitué par exemple d'ondes électromagnétiques et d'envoyer ce signal, par l'intermédiaire de l'antenne 16, au micromodule disposé à distance par voie sans-fil, typiquement par voie hertzienne.

Le générateur 12 est dimensionné pour générer une énergie électrique dès lors que l'effort appliqué sur le levier est de 4,20 N au minimum. Un calcul théorique montre alors que cet effort est atteint dès lors que le bouton 4 transmet à l'organe de transmission 14 un effort de 6,9 N environ, notamment au niveau de l'une des faces bombées 14b de l'organe de transmission 14. Egalement, on montre qu'un tel effort de 6,9 N peut être atteint dès lors que l'on applique, au minimum, un effort de 1,7 N environ sur le bouton 4.

On comprend donc que l'effort qui est finalement transmis au générateur 12 à travers l'organe de transmission 14 de l'interrupteur 2 est supérieur à l'effort F1 appliqué en entrée, c'est-à-dire à l'effort exercé par un utilisateur lorsqu'il appuie sur le bouton 4. Ceci provient en fait des effets de levier que l'on retrouve dans la cinématique d'actionnement de l'interrupteur 2.

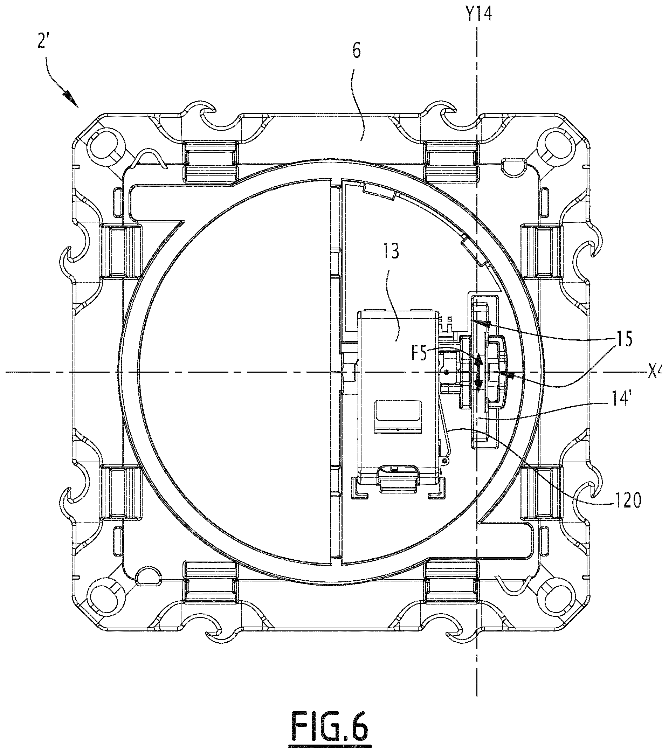

Sur les figures 6 et 7 est représenté un deuxième mode de réalisation de l'invention. Dans ce qui suit, seules les différences par rapport au premier mode de réalisation sont décrites, par souci de concision. Egalement, les éléments de l'interrupteur identiques à ceux du premier mode de réalisation ont les mêmes références numériques, tandis que les éléments différents voient leur référence numérique suivie d'une prime (`).

Dans ce mode de réalisation, l'organe de transmission 14' est un coulisseau, mobile en translation suivant un axe Y14 perpendiculaire à l'axe X4 de basculement du bouton 4'. L'axe Y14 est également parallèle à la paque support 6 de l'interrupteur.

A la figure 6, la double flèche F5 montre les deux directions possibles pour le déplacement de l'organe de transmission 14' en translation, selon la direction de basculement du bouton 4'.

Le coulisseau est guidé dans son mouvement en translation par des parois de la plaque support 6, lesquelles forment des moyens de guidage 15. Il délimite également une fente (non visible sur les figures) de réception de la partie 120a du levier d'actionnement 120 du générateur 12.

L'axe Y14 est dans l'exemple parallèle à la surface de la plaque support 6.

Dans ce mode de réalisation, et comme visible à la figure 7, le bouton 4' comprend des pattes 42', comparables à celles du premier mode de réalisation, mais qui sont davantage écartées l'une de l'autre. L'écartement entre les pattes 42' correspond sensiblement à la longueur du coulisseau, mesurée parallèlement à son axe de déplacement Y14. Notamment, en configuration assemblée de l'interrupteur 2', les pattes 42' sont disposées de part et d'autre de l'organe de transmission 14'.

En faisant basculer le bouton 4', on pousse sur le coulisseau, c'est-à-dire sur l'organe de transmission 14', d'un côté ou de l'autre. Le coulisseau se déplace alors parallèlement à l'axe Y14 et entraine dans son déplacement la rotation du levier 120 : le générateur 12 est alors activé et convertit l'énergie mécanique du levier 120 en une énergie électrique, laquelle pourra être utilisée pour générer et envoyer un signal, par exemple un signal radio, à destination de l'interrupteur à distance branché sur fil.

En variante non représentée, l'interrupteur 2 comprend un moyen de rappel en position ouverte, c'est-à-dire en position de repos, dans laquelle l'interrupteur ne transmet aucun signal à destination de l'interrupteur filaire. Ce moyen de rappel peut par exemple prendre la forme d'un ressort à lame, positionné au centre en dessous du bouton.

Les caractéristiques des modes de réalisation décrits sur les figures et des variantes non représentées peuvent être combinées entre elles pour générer de nouveaux modes de réalisation de l'invention.

## Revendications

1. Dispositif de commande sans fil (2'), comprenant :
- un bouton d'actionnement (4') du dispositif pour l'envoi d'un signal de commande à un autre dispositif, basculant et pivotant autour d'un axe (X4) sous l'effet d'une force d'activation (F1),
- un circuit électronique de commande (10), comportant un émetteur (16) capable de transmettre, par voie sans fil, un signal de commande à un autre dispositif de commande branché sur un fil électrique,
- un générateur électrique (12) pour alimenter le circuit (10), ce générateur étant capable de convertir une énergie mécanique en énergie électrique,
- un organe de transmission (14'), pour transmettre une énergie mécanique appliquée sur le bouton d'actionnement (4') au générateur (12),
**caractérisé en ce que** le générateur électrique (12) comprend au moins une bobine et un bloc coulissant (122) guidé dans un rail (124) et comprenant au moins un aimant,
**en ce que** le dispositif de commande sans fil (2) comprend un mécanisme incluant un levier d'actionnement (120), le levier d'actionnement comprenant une première partie (120a) configurée pour coopérer avec l'organe de transmission (14') et une seconde partie (120b) reliée au bloc coulissant (122) du générateur (12),
**en ce que** le levier d'actionnement est monté pivotant autour d'un axe de pivotement (Z120) au niveau d'une partie intermédiaire, c'est-à-dire entre la première partie et la deuxième partie,
**en ce que** la seconde partie (120b) du levier d'actionnement est reliée au bloc coulissant (122) par une liaison pivot dont un axe de rotation (Z122) est parallèle à l'axe de pivotement (Z120) du levier d'actionnement et perpendiculaire au sens de déplacement du bloc coulissant.
**en ce que** le mécanisme est configuré pour générer un mouvement de translation (F4) à partir de la bascule du bouton d'actionnement,
**en ce que** le bouton d'actionnement comprend deux pattes (42'), les pattes étant disposées de part et d'autre de l'organe de transmission (14'),
**en ce que** le basculement du bouton d'actionnement pousse sur l'organe de transmission d'un côté ou de l'autre, entraînant le déplacement de l'organe de transmission perpendiculairement à l'axe (X4) de basculement du bouton d'actionnement,
et **en ce que** le déplacement de l'organe de transmission perpendiculairement à l'axe (X4) de basculement du bouton d'actionnement entraîne la rotation du levier d'actionnement (120) autour de l'axe de pivotement (Z120).

2. Dispositif de commande selon la revendication 1, dans lequel l'organe de transmission (14') est un coulisseau.

3. Dispositif de commande selon la revendication 2, dans lequel le déplacement du coulisseau a lieu parallèlement à un axe (Y14) perpendiculaire à l'axe (X4) de basculement du bouton d'actionnement.

4. Dispositif de commande selon la revendication 3, dans lequel l'écartement entre les deux pattes (42') correspond sensiblement à la longueur de l'organe de transmission (14'), mesurée parallèlement à son axe de déplacement (Y14).

5. Dispositif de commande selon l'une des revendications 3 et 4, dans lequel l'axe (Y14) de déplacement du coulisseau (14') est parallèle à une plaque support (6) sur laquelle le générateur électrique (12) est fixé.

6. Dispositif de commande selon l'une des revendications précédentes, dans lequel l'organe de transmission (14') est guidé dans son mouvement en translation par des moyens de guidage (15) formés par des parois d'une plaque support (6) sur laquelle le générateur électrique (12) est fixé.

7. Dispositif de commande selon l'une des revendications précédentes, dans lequel les deux pattes (42') sont aptes à pousser l'organe de transmission suivant une direction perpendiculaire à un axe (X4) de basculement du bouton (4')

8. Dispositif de commande selon l'une des revendications précédentes, dans lequel la première partie (120a) du levier d'actionnement (120) est reçue dans une fente (14c) de l'organe de transmission (14').

9. Dispositif de commande selon l'une des revendications précédentes, dans lequel la première partie (120a) et la deuxième partie (120b) du levier d'actionnement (120) sont chacune constituées de deux branches sensiblement parallèles.

10. Dispositif de commande selon l'une des revendications précédentes, dans lequel le levier d'actionnement (120) est interposé entre les deux branches d'une plaque en U (18) formant un support de pivotement autour de l'axe de pivotement (Z120).

11. Ensemble comprenant un dispositif de commande sans fil (2') selon l'une des revendications précédentes et un autre dispositif de commande, qui est apte à être branché sur un fil électrique et qui comporte un micro-récepteur configuré pour recevoir un signal de commande envoyé par le dispositif de commande sans-fil (2').

## Patentansprüche

1. Drahtlose Steuervorrichtung (2'), umfassend:
- einen Betätigungsknopf (4') der Vorrichtung für den Versand eines Steuersignals an eine andere Vorrichtung, der unter der Wirkung einer Aktivierungskraft (F1) um eine Achse (X4) kippt und schwenkt,
- eine elektronische Steuerschaltung (10), die einen Sender (16) aufweist, der imstande ist, über den drahtlosen Weg ein Steuersignal an eine andere über eine elektrische Leitung angeschlossene Steuervorrichtung zu übertragen,
- einen Stromerzeuger (12) zur Versorgung der Schaltung (10), wobei dieser Erzeuger imstande ist, eine mechanische Energie in elektrische Energie umzuwandeln,
- eine Übertragungseinrichtung (14'), um eine auf den Betätigungsknopf (4') angewendete mechanische Energie an den Erzeuger (12) zu übertragen,
**dadurch gekennzeichnet, dass** der Stromerzeuger (12) mindestens eine Spule und einen gleitenden Block (122) umfasst, der in einer Schiene (124) geführt wird und mindestens einen Magneten umfasst,
dass die drahtlose Steuervorrichtung (2) einen Mechanismus umfasst, der einen Betätigungshebel (120) einschließt, wobei der Betätigungshebel einen ersten Teil (120a) umfasst, der dazu ausgelegt ist, mit der Übertragungseinrichtung (14') zusammenzuwirken, und einen zweiten Teil (120b), der mit dem gleitenden Block (122) des Erzeugers (12) verbunden ist,
dass der Betätigungshebel im Bereich eines Übergangsteils um eine Schwenkachse (Z120) schwenkend angebracht ist, das heißt, zwischen dem ersten Teil und dem zweiten Teil,
dass der zweite Teil (120b) des Betätigungshebels mit dem gleitenden Block (122) durch eine Zapfenverbindung verbunden ist, von der eine Rotationsachse (Z122) parallel zur Schwenkachse (Z120) des Betätigungshebels und senkrecht zur Verlagerungsrichtung des gleitenden Blocks ist,
dass der Mechanismus dazu ausgelegt ist, eine Translationsbewegung (F4) ausgehend vom Kippen des Betätigungsknopfs zu erzeugen,
dass der Betätigungsknopf zwei Beine (42') umfasst, wobei die Beine auf der einen und der anderen Seite der Übertragungseinrichtung (14') angeordnet sind,
dass das Kippen des Betätigungsknopfs auf der Übertragungseinrichtung von der einen Seite oder der anderen drückt, was die Verlagerung der Übertragungseinrichtung senkrecht zur Kippachse (X4) des Betätigungsknopfs bewirkt,
und dass die Verlagerung der Übertragungseinrichtung senkrecht zur Kippachse (X4) des Betätigungsknopfs bewirkt, dass sich der Betätigungshebel (120) um die Schwenkachse (Z120) in Rotation versetzt.

2. Steuervorrichtung nach Anspruch 1, wobei die Übertragungseinrichtung (14') ein Gleitstück ist.

3. Steuervorrichtung nach Anspruch 2, wobei die Verlagerung des Gleitstücks parallel zu einer Achse (Y14) erfolgt, die senkrecht zur Kippachse (X4) des Betätigungsknopfs ist.

4. Steuervorrichtung nach Anspruch 3, wobei der Abstand zwischen den zwei Beinen (42') etwa der Länge der Übertragungseinrichtung (14') entspricht, gemessen parallel zu ihrer Verlagerungsachse (Y14).

5. Steuervorrichtung nach einem der Ansprüche 3 und 4, wobei die Verlagerungsachse (Y14) des Gleitstücks (14') parallel zu einer Trägerplatte (6) ist, auf der der Stromerzeuger (12) befestigt ist.

6. Steuervorrichtung nach einem der vorangehenden Ansprüche, wobei die Übertragungseinrichtung (14') bei ihrer Translationsbewegung von Führungsmitteln (15) geführt wird, die von den Wänden einer Trägerplatte (6) gebildet sind, auf der der Stromerzeuger (12) befestigt ist.

7. Steuervorrichtung nach einem der vorangehenden Ansprüche, wobei die zwei Beine (42') in der Lage sind, die Übertragungseinrichtung in eine Richtung zu drücken, die senkrecht zu einer Kippachse (X4) des Knopfs (4') ist.

8. Steuervorrichtung nach einem der vorangehenden Ansprüche, wobei der erste Teil (120a) des Betätigungshebels (120) in einem Schlitz (14c) der Übertragungseinrichtung (14') aufgenommen ist.

9. Steuervorrichtung nach einem der vorangehenden Ansprüche, wobei der erste Teil (120a) und der zweite Teil (120b) des Betätigungshebels (120) jeweils aus zwei etwa parallelen Schenkeln bestehen.

10. Steuervorrichtung nach einem der vorangehenden Ansprüche, wobei der Betätigungshebel (120) zwischen den zwei Schenkeln einer U-förmigen Platte (18) angeordnet ist, die eine Kippunterlage um die Schwenkachse (Z120) bildet.

11. Anordnung, umfassend eine drahtlose Steuervorrichtung (2') nach einem der vorangehenden Ansprüche und eine andere Steuervorrichtung, die in der Lage ist, an eine elektrische Leitung angeschlossen zu sein und die einen Mikroempfänger aufweist, der dazu ausgelegt ist, ein Steuersignal zu empfangen, das von der drahtlosen Steuervorrichtung (2') gesendet wird.

## Claims

1. A wireless control device (2'), comprising:
- an actuating button (4') of the device for sending a control signal to another device, tilting and pivoting about an axis (X4) under the effect of an activation force (F1),
- an electronic control circuit (10), including a transmitter (16) capable of wirelessly transmitting a control signal to another control device connected to an electric wire,
- an electric generator (12) to power the circuit (10), this generator being capable of converting mechanical energy into electrical energy,
- a transmission member (14'), for transmitting mechanical energy applied on the actuating button (4') to the generator (12),
**characterized in that** the electric generator (12) comprises at least one winding and a sliding block (122) guided in a rail (124) and comprising at least one magnet,
**in that** the wireless control device (2) comprises a mechanism including an actuating lever (120), the actuating lever comprising a first part (120a) configured to cooperate with the transmission member (14') and a second part (120b) connected to the sliding block (122) of the generator (12),
**in that** the actuating lever is mounted pivoting about a pivot axis (Z120) at an intermediate part, that is to say, between the first part and the second part,
**in that** the second part (120b) of the actuating lever is connected to the sliding block (122) by a pivot link whereof an axis of rotation (Z122) is parallel to the pivot axis (Z120) of the actuating lever and perpendicular to the movement direction of the sliding block,
**in that** the mechanism is configured to generate a translational movement (F4) from the tilt of the actuating button,
**in that** the actuating button comprises two tabs (42'), the tabs being arranged on either side of the transmission member (14'),
**in that** the tilting of the actuating button pushes on the transmission member on one side or the other, driving the movement of the transmission member perpendicularly to the tilting axis (X4) of the actuating button,
and **in that** the movement of the transmission member perpendicularly to the tilting axis (X4) of the actuating button drives the rotation of the actuating lever (120) about the pivot axis (Z120).

2. The control device according to claim 1, wherein the transmission member (14') is a slide.

3. The control device according to claim 2, wherein the movement of the slide takes place parallel to an axis (Y14) that is perpendicular to the tilting axis (X4) of the actuating button.

4. The control device according to claim 3, wherein the separation between the two tabs (42') corresponds substantially to the length of the transmission member (14'), measured parallel to its movement axis (Y14).

5. The control device according to one of claims 3 and 4, wherein the movement axis (Y14) of the slide (14') is parallel to a support plate (6) on which the electric generator (12) is attached.

6. The control device according to one of the preceding claims, wherein the translational movement of the transmission member (14') is guided by guide means (15) formed by walls of a support plate (6) on which the electric generator (12) is attached.

7. The control device according to one of the preceding claims, wherein the two tabs (42') are able to push the transmission member in a direction perpendicular to a tilting axis (X4) of the button (4').

8. The control device according to one of the preceding claims, wherein the first part (120a) of the actuating lever (120) is received in a slot (14c) of the transmission member (14').

9. The control device according to one of the preceding claims, wherein the first part (120a) and the second part (120b) of the actuating lever (120) are each made up of two substantially parallel branches.

10. The control device according to one of the preceding claims, wherein the actuating lever (120) is interposed between the two branches of a U-shaped plate (18) forming a pivot support about the pivot axis (Z120).

11. An assembly comprising a wireless control device (2') according to one of the preceding claims and another control device, which is able to be connected to an electric wire and which includes a micro-receiver configured to receive a control signal sent by the wireless control device (2').
